(19) Europäisches Patentamt
European Patent Office
Office européen des brevets

(11) EP 1 301 984 B1

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(21) Anmeldenummer: **01955247.0**

(22) Anmeldetag: **12.07.2001**

(51) Int Cl.[7]: **H02M 3/157**

(86) Internationale Anmeldenummer:
**PCT/DE2001/002652**

(87) Internationale Veröffentlichungsnummer:
**WO 2002/009263 (31.01.2002 Gazette 2002/05)**

(54) **VOLLDIGITALER SPANNUNGSWANDLER**

FULLY DIGITAL VOLTAGE TRANSFORMER

CONVERTISSEUR DE TENSION ENTIEREMENT NUMERIQUE

(84) Benannte Vertragsstaaten:
**AT BE CH CY DE DK ES FI FR GB GR IE IT LI LU MC NL PT SE TR**

(30) Priorität: **20.07.2000 DE 10035418**

(43) Veröffentlichungstag der Anmeldung:
**16.04.2003 Patentblatt 2003/16**

(73) Patentinhaber: **Infineon Technologies AG**
**81669 München (DE)**

(72) Erfinder: **KRANZ, Christian**
**40885 Ratingen Lintorf (DE)**

(74) Vertreter: **Lange, Thomas, Dr.**
**Patentanwälte**
**Lambsdorff & Lange**
**Dingolfinger Strasse 6**
**81673 München (DE)**

(56) Entgegenhaltungen:
**US-A- 4 532 435**
**US-A- 5 499 967**
**US-A- 5 552 694**
**US-A- 6 005 377**
**US-A- 6 023 190**

- **TANG ET AL: "Design of DSP-based controller for switching power converters" TENCON '96. PROCEEDINGS., 1996 IEEE TENCON. DIGITAL SIGNAL PROCESSING APPLICATIONS PERTH, WA, AUSTRALIA 26-29 NOV. 1996, NEW YORK, NY, USA,IEEE, US, 26. November 1996 (1996-11-26), Seiten 889-894, XP010236799 ISBN: 0-7803-3679-8**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 301 984 B1

Printed by Jouve, 75001 PARIS (FR)

## Beschreibung

Die Erfindung betrifft einen getakteten Spannungswandler sowie ein Verfahren zur Erzeugung eines Regelwerts für einen derartigen getakteten Spannungswandler.

Häufig tritt die Situation auf, daß eine Gleichspannungsquelle zur Verfügung steht, welche eine von der benötigten Spannung verschiedene Spannung liefert. Zur Lösung dieses Problems sind getaktete Gleichspannungswandler bekannt, welche die zur Verfügung stehende Spannung in die benötigte Spannung umwandeln. Derartige Wandler bestehen im wesentlichen jeweils aus drei Bauteilen, nämlich aus einem Leistungsschalter, einer Speicherdrossel sowie einem Glättungskondensator. Mit Hilfe dieser Bauelemente lassen sich sowohl Abwärts-Wandler (Ausgangsspannung < Eingangsspannung) als auch Aufwärts-Wandler (Ausgangsspannung > Eingangsspannung) realisieren. Die entsprechenden Grundschaltungen sind in dem Standardwerk "Halbleiter-Schaltungstechnik" von U. Tietze und Ch. Schenk, 11. Auflage (Springer) in Kapitel 16.6 (S. 979 ff) dargestellt.

Um einen regelbaren DC-Wandler realisieren zu können, muß der Leistungsschalter durch ein Rechtecksignal mit nachregelbarem Tastverhältnis angesteuert werden. Zur Erzeugung eines derartigen Rechtecksignals kann ein analoger Impulsbreitenmodulator verwendet werden, der aus einem Sägezahngenerator und einem Komparator besteht. Dem Komparator wird nun einerseits die vom Sägezahngenerator erzeugte Dreieckspannung und andererseits ein aus der Ausgangsspannung abgeleitetes Regelsignal zugeführt. Der Komparator schaltet den Schalter ein, solange das Regelsignal größer ist als die Dreiecksspannung. Sobald das Regelsignal die Dreieckspannung unterschreitet, wird der Leistungsschalter ausgeschaltet. Auf diese Weise ergibt sich ein zum Regelsignal proportionales Tastverhältnis.

Auf den Seiten 983 bis 985 des oben angeführten Buchs "Halbleiter-Schaltungstechnik" (11. Auflage) von Tietze/Schenk ist eine vollständige Implementierung eines Abwärts-Wandlers unter Verwendung eines analogen Impulsbreitenmodulators beschrieben.

Analog aufgebaute Regelschaltungen haben den Nachteil, daß ihre Integration in CMOS-Schaltungen aufwendig ist, weil der Entwurf der analogen Schaltungsbestandteile gesondert vom standardisierten CMOS-Schaltungsdesign erfolgt. Außerdem sind Digitalschaltungen mit umfangreichen analogen Schaltungsbestandteilen für ihren hohen Bedarf an Chipfläche bekannt. Aus diesem Grund wäre es wünschenswert, einen möglichst großen Teil der analogen Schaltungsbestandteile durch Digitalschaltungen gleicher Funktionalität ersetzen zu können.
In der Schrift US 6,005,377 ist ein Spannungswandler beschrieben, bei dem die Ausgangsspannung mittels eines A/D-Wandlers digitalisiert wird. Das Digitalsignal wird an einen Komparator übertragen, welcher aus einem Vergleich des Digitalsignals mit einem Referenzsignal ein Fehlersignal erzeugt. Das Fehlersignal wird gefiltert und zur Erzeugung eines Regelwertes für die Schaltzeiteinstellung verwendet.

Aus der Schrift US 5,552,694 ist ein Spannungswandler bekannt, bei dem die Ausgangsspannung innerhalb eines vorgebbaren begrenzten Spannungswertbereiches liegen soll. Ist diese Ausgangsspannung außerhalb dieses Spannungswertbereiches, werden die An- bzw. Abschaltzeiten von Steuertransistoren derart gesteuert, dass die Ausgangsspannung wieder innerhalb des Spannungswerteintervalls gelangt.

Es ist Aufgabe der Erfindung, einen getakteten Spannungswandler zur Verfügung zu stellen, der unter weitgehender Vermeidung analoger Komponenten aufgebaut ist und bei dem ein insbesondere für digitale Regelschaltungen geeigneter Regelwert verwendet wird.

Diese Aufgabe der Erfindung wird durch einen getakteten Spannungswandler gemäß Anspruch 1 sowie durch ein Verfahren zur Erzeugung eines Regelwerts gemäß Anspruch 18 gelöst.

Der erfindungsgemäße getaktete Spannungswandler umfaßt unter anderem eine Digitalisierungseinheit, die ein für die Höhe der Ausgangsspannung repräsentatives Digitalsignal liefert. Das von der Digitalisierungseinheit bereitgestellte Digitalsignal wird von einer digitalen Regelschaltung mit einem Abtasttakt ausgelesen, dessen Frequenz höher ist als die Frequenz des Schalttakts.

Bei der erfindungsgemäßen Lösung wird die Ausgangsspannung also zum frühestmöglichen Zeitpunkt digitalisiert, und aus diesem Grund können sämtliche Regelkreiskomponenten - mit Ausnahme der Digitalisierungseinheit selbst - in digitaler Technik ausgeführt werden. Dies bedeutet insbesondere, daß sich die gesamte digitale Regelschaltung sowie der Taktgenerator in vorteilhafter Weise in das CMOS-Design einbinden lassen. Damit wird eine kleinere und kostengünstigere Ausführung der Regelschaltung ermöglicht.

Das Auslesen des von der Digitalisierungseinheit gelieferten Digitalsignals erfolgt mit einem Abtasttakt, dessen Frequenz höher ist als die Frequenz des Schalttakts. Pro Schalttakt kann daher eine Vielzahl von Digitalsignalwerten erfaßt werden. Dadurch ist es möglich, die Ausgangsspannung nicht nur punktuell, sondern in ihrem gesamten Verlauf zu erfassen und für die Bestimmung des Regelwerts zu verwenden. Dies ermöglicht es, den Regelwert sehr genau auf die am Wandlerausgang vorliegenden Spannungsverhältnisse auszurichten. Der ermittelte Regelwert dient dann zur Einstellung des Tastverhältnisses des Rechtecksignals, das zur Ansteuerung des Schaltelements verwendet wird.

Gemäß einer vorteilhaften Ausführungsform der Erfindung wird das von der Digitalisierungseinheit gelieferte

Digitalsignal nur während der Aus-Phase des Schalttakts ausgelesen. Während der An-Phase des Schalttakts befindet sich das Schaltelement im leitenden Zustand, die Drosselspule ist mit der Versorgungsspannung verbunden, und es baut sich ein Strom durch die Spule auf. In der Aus-Phase des Schalttakts dagegen leitet das Schaltelement nicht, und der gespeicherte Strom fließt durch die Diode in den Ausgangskondensator und in die angeschlossene Last. Dieser Stromfluß bewirkt eine Erhöhung der Ausgangsspannung während der Aus-Phase. Aus diesem Grund eignet sich der Verlauf der Ausgangsspannung während der Aus-Phase des Schalttakts besonders gut für die Ermittlung der Regelgröße.

Gemäß einer weiteren vorteilhaften Ausführungsform der Erfindung wird der Regelwert dergestalt generiert bzw. das Tastverhältnis und/oder die Taktfrequenz des Schalttakts dergestalt geregelt, daß ein vorbestimmter Bruchteil der während der Aus-Phase des Schalttakts ausgelesenen Digitalsignalwerte Ausgangsspannungen oberhalb der Sollspannung repräsentiert, und daß der restliche Teil der während der Aus-Phase des Schalttakts ausgelesenen Digitalsignalwerte Ausgangsspannungen unterhalb der Sollspannung repräsentiert.

Bei dieser Ausführungsform der Erfindung wird die Ausgangsspannung also jeweils so nachgeregelt, daß ein vorbestimmter Teil des Ausgangsspannungsverlaufs oberhalb und der restliche Teil unterhalb der Sollspannung liegt. Mit einer derartigen, den gesamten Spannungsverlauf berücksichtigenden Regelung wird ein robustes und störungsfreies Regelverhalten ermöglicht. Einzelne "Ausreißer" unter den Digitalsignalwerten beeinträchtigen das Regelverhalten nur unmaßgeblich.

Insbesondere ist es von Vorteil, wenn die Hälfte der während der Aus-Phase des Schalttakts ausgelesenen Digitalsignalwerte Ausgangsspannungen oberhalb der Sollspannung repräsentieren. Der Ausgangsspannungsverlauf wird also so nachgeregelt, daß die Zahl der Spannungswerte oberhalb der Sollspannung gleich der Zahl der Spannungswerte unterhalb der Sollspannung wird. Die Sollspannung entspricht dann etwa dem Mittelwert des während der Aus-Phase des Schalttakts erzeugten Spannungsverlauf.

Es ist vorteilhaft, als Digitalisierungseinheit eine Komparatorschaltung zu verwenden, die die Ausgangsspannung mit einer vorgegebenen Sollspannung vergleicht. Eine Komparatorschaltung stellt die einfachste und kostengünstigste Ausführungsform einer Digitalisierungseinheit dar. Der analoge Schaltungsaufwand ist hier minimiert.

Es ist von Vorteil, wenn die Komparatorschaltung im Fall einer die Sollspannung übersteigenden Ausgangsspannung einen ersten Digitalsignalwert und im Fall einer die Sollspannung unterschreitenden Ausgangsspannung einen zweiten Digitalsignalwert liefert. Am Ausgang der Komparatorschaltung liegt also jeweils die digitale Information vor, ob die Ausgangsspannung größer ist als der Sollwert oder nicht. Für viele Regelungszwecke ist diese auf ein Bit reduzierte Information aber ausreichend. Der Verlauf der Ausgangsspannung kann immerhin schon insoweit verfolgt werden, daß aus den Digitalsignalwerten der Zeitpunkt ablesbar ist, zu dem die Sollspannung unterschritten wird.

Gemäß einer alternativen Ausführungsform der Erfindung handelt es sich bei der Digitalisierungseinheit um einen Analog/Digital-Wandler. Ein A/D-Wandler liefert ein für die Höhe der Ausgangsspannung repräsentatives, mehrere Bit breites Digitalsignal. Damit wird eine genauere Erfassung des Ausgangsspannungsverlaufs ermöglicht. Außerdem ist es bei Verwendung eines A/D-Wandlers möglich, die Sollspannung rechnerisch zu berücksichtigen. Daher muß die Sollspannung nicht als tatsächliche Spannung zur Verfügung gestellt werden.

Es ist von Vorteil, wenn die digitale Regelschaltung einen Zähler umfaßt, dessen Zählerstand für jeden während der Aus-Phase des Schalttakts ausgelesenen Digitalsignalwert, der eine Ausgangsspannung oberhalb der Sollspannung repräsentiert, inkrementiert wird und dessen Zählerstand für jeden während der Aus-Phase des Schalttakts ausgelesenen Digitalsignalwert, der eine Ausgangsspannung unterhalb der Sollspannung repräsentiert, dekrementiert wird.

Der Zähler zählt für jeden auftretenden Digitalsignalwert um eins vorwärts oder rückwärts, wobei die Zählrichtung durch den Ausgang der Digitalisierungseinheit bestimmt wird. Mit einem derartigen Zähler kann die Differenz der oberhalb und unterhalb der Sollspannung befindlichen Digitalsignalwerte auf einfache Weise ermittelt werden.

Wenn zum Ende der Aus-Phase des Schalttakts ein positiver Zählerstand vorliegt, so bedeutet das, daß die Zahl der erfaßten Ausgangsspannungen oberhalb der Sollspannung größer ist als die Zahl der erfaßten Ausgangsspannungen unterhalb der Sollspannung. Das wiederum bedeutet, daß die Ausgangsspannung im Schnitt zu hoch ist und nach unten reguliert werden muß. Wenn dagegen nach der Aus-Phase des Schalttakts ein negativer Zählerstand vorliegt, dann muß die Ausgangsspannung im Mittel angehoben werden.

Es ist von Vorteil, den nach jeder Aus-Phase eines Schalttakts vorliegenden Zählerstand zur Bestimmung des aktuellen Regelwerts zu verwenden, wobei ein positiver Zählerstand den Regelwert so beeinflußt, daß die An-Phase des Schalttakts verkürzt wird, und wobei ein negativer Zählerstand den Regelwert so beeinflußt, daß die An-Phase des Schalttakts verlängert wird.

Bei positivem Zählerstand muß das Ziel der Regelung sein, die Ausgangsspannung im Mittel abzusenken. Zu diesem Zweck wird das Tastverhältnis des Schalttakts so verändert, daß die An-Phase verkürzt wird. Dies bedeutet, daß die Drosselspule weniger lang mit der Versorgungsspannung verbunden ist, und in dieser kurzen Zeitspanne kann sich nur ein geringer Stromfluß durch die Drossel entwickeln. Deshalb fällt auch der Beitrag des Drosselstroms zur Ausgangsspannung geringer aus, und die Ausgangsspannung sinkt.

Umgekehrt kommt einem negativen Zählerstand die Bedeutung einer im Schnitt zu niedrigen Ausgangsspannung zu. Hier muß deshalb die An-Phase des Schalttakts verlängert werden, um zu einer höheren Ausgangsspannung zu gelangen.

Es ist von Vorteil, wenn nur Variationen der Aus-Phase des Schalttakts bis zu einer vorgegebenen oberen Grenze zugelassen werden.

Diese obere Grenze sollte deshalb nicht überschritten werden, weil dann die erforderliche Einschaltdauer kürzer als die minimal realisierbare Einschaltdauer $T_{min}$ des Schaltelements wird. In diesem Fall steigt die Ausgangsspannung nach einem Einschaltpuls von $T_{min}$ soweit an, daß der Transistor anschließend für mehrere Perioden gesperrt ist. Daraus resultiert ein sehr unruhiger Betrieb.

Entsprechend ist es von Vorteil, wenn nur Variationen der Aus-Phase des Schalttakts bis zu einer vorgegebenen unteren Grenze zugelassen werden, denn ansonsten würde die minimal realisierbare Ausschaltdauer eines Transistors unterschritten.

Gemäß einer weiteren vorteilhaften Ausgestaltung der Erfindung ist der Schalttakt ein Vielfaches des Abtasttakts. Der Abtasttakt dient zum Auslesen des Ausgangs der Digitalisierungseinheit. Je höher die Abtastfrequenz ist, desto höher ist die Zahl der erfaßten Digitalsignalwerte. Dadurch kann der Verlauf der Ausgangsspannung genau erfaßt und bei der Regelung berücksichtigt werden.

Insbesondere ist es von Vorteil, die Frequenz des Schalttakts mittels eines Frequenzteilers aus der höheren Abtastfrequenz zu erzeugen. Auf diese Weise muß dem Spannungswandler lediglich die Abtastfrequenz zugeführt werden, die Frequenz des Schalttakts erzeugt sich der Spannungswandler dann selbst. Dies hat außerdem den Vorteil, daß Schalttakt und Abtasttakt zueinander synchronisiert sind.

Gemäß einer weiteren vorteilhaften Ausführungsform der Erfindung wird ein für die Höhe des Drosselstroms repräsentatives Digitalsignal generiert, das der digitalen Regelschaltung zugeführt und bei der Bestimmung des Regelwerts berücksichtigt wird. Für die Regelung kommt es dabei insbesondere darauf an, ob der Speicherdrosselstrom während der Aus-Phase auf Null abfällt (lückender Betrieb) oder nicht (nicht lückender Betrieb).

Eine andere vorteilhafte Ausgestaltung sieht vor, daß ein für die Höhe der Eingangsspannung repräsentatives Digitalsignal generiert wird, das eine Anpassung der Regelschaltung an verschiedene Eingangsspannungen erlaubt.

Eine weitere Ausführungsform der Erfindung sieht ein Digitalsignal zur Unterscheidung von lückendem und nicht lückendem Betrieb vor, das der digitalen Regelschaltung zugeführt und bei der Bestimmung des Regelwerts berücksichtigt wird. Lükkender Betrieb tritt dann auf, wenn die angeschlossene Last nur wenig Leistung aufnimmt. In diesem Fall fällt der Spulenstrom während der Aus-Phase des Schalttakts auf Null ab und trägt dann nichts mehr zur Ausgangsspannung bei. Bei lückendem Betrieb liegt ein großer Teil der Ausgangsspannungswerte unterhalb der Sollspannung. Deshalb wird die Ausgangsspannung bei lückendem Betrieb tendenziell auf zu hohe Werte eingeregelt. Das Digitalsignal zur Unterscheidung von lückendem und nicht lückendem Betrieb dient zur Vermeidung dieser Fehlregelung.

Beim erfindungsgemäßen Verfahren zur Erzeugung eines Regelwerts für einen getakteten Spannungswandler wird zuerst die Ausgangsspannung des Spannungswandlers mit einem Abtasttakt ausgelesen, dessen Frequenz höher ist als die Frequenz des Schalttakts des Spannungswandlers. Anschließend wird ein Regelwert durch Auswerten der bei der Abtastung gewonnenen Spannungswerte erzeugt. Beispielsweise kann im Rahmen der Auswertung ermittelt werden, wie viele der während der Aus-Phase des Schalttakts ausgelesenen Spannungswerte eine vorgegebene Sollspannung überschreiten bzw. unterschreiten. Im nächsten Schritt wird der Schalttakt erzeugt, wobei das Tastverhältnis und/oder die Taktfrequenz des Schalttaktes durch den Regelwert beeinflußt werden. Die Nachregelung des Tastverhältnisses und/oder der Taktfrequenz des Schalttakts erfolgt vorzugsweise dergestalt, daß ein vorgegebener Bruchteil der während der Aus-Phase ausgelesenen Ausgangsspannungen Spannungswerte oberhalb der Sollspannung aufweist und daß der restliche Teil Spannungswerte unterhalb der Sollspannung aufweist.

Bei getakteten Spannungswandler ergibt sich während der Aus-Phase des Schalttakts ein schräger Abfall der Ausgangsspannung, der sich in vorteilhafter Weise für die Spannungsregelung ausnutzen läßt. Um diesen Verlauf hinreichend genau erfassen zu können, muß eine genügend große Zahl von Abtast-Samples aufgenommen werden.

Anschließend muß eine Aussage darüber getroffen werden, wie der während der Aus-Phase ermittelte Spannungsverlauf relativ zu der vorgegebenen Sollspannung liegt. Zu diesem Zweck wird ermittelt, wie viele der Spannungswerte, die den abfallenden Spannungsverlauf während $T_{off}$ beschreiben, oberhalb bzw. unterhalb der vorgegebenen Sollspannung liegen. Ziel der Regelung ist es, den Verlauf der Ausgangsspannung in eine bestimmte Position relativ zu der vorgegebenen Sollspannung zu bringen. Diese Relativposition kann dadurch beschrieben werden, daß ein bestimmter Bruchteil der während $T_{off}$ erfaßten Spannungswerte oberhalb und der Rest unterhalb der Sollspannung liegt. Wenn zu viele Ausgangsspannungswerte oberhalb der Sollspannung liegen, dann muß die Ausgangsspannung im Mittel nach unten korrigiert werden. Auf diese Weise kann ein geeigneter Regelwert erzeugt werden, der eine robuste und störungsarme Regelung der Ausgangsspannung erlaubt.

Nachfolgend wird die Erfindung anhand mehrerer in der Zeichnung dargestellter Ausführungsbeispiele weiter beschrieben. Es zeigen:

Fig. 1 eine Ausführungsform des erfindungsgemäßen Spannungswandlers, bei der ein Komparator als Digitalisierungseinheit verwendet wird;

Fig. 2 eine weitere Ausführungsform der Erfindung, bei der ein Analog/Digital-Wandler als Digitalisierungseinheit verwendet wird;

Fig. 3A eine Darstellung des zeitlichen Verlaufs der Ausgangsspannung für den Fall eines nicht lückenden Betriebs;

Fig. 3B den zugehörigen zeitlichen Verlauf des Schalttaktsignals, das zur Ansteuerung des Leistungstransistors verwendet wird;

Fig. 4A eine Darstellung des zeitlichen Verlaufs der Ausgangsspannung für den Fall geringer'Lastströme (lückender Betrieb);

Fig. 4B den zugehörigen zeitlichen Verlauf des Schalttaktsignals;

Fig. 5 eine detaillierte Darstellung der erfindungsgemäßen digitalen Regelschaltung.

Fig. 1 zeigt den Schaltplan eines getakteten Gleichspannungswandlers, der die Eingangsspannung $U_{in}$ in die Ausgangsspannung $U_{out}$ umwandelt. Bei dem dargestellten Spannungswandler handelt es sich um einen Spannungshochsetzer, bei dem die Eingangsspannung $U_{in}$ kleiner ist als die Ausgangsspannung $U_{out}$. Die erfindungsgemäße Spannungsregelung läßt sich aber auch für Abwärts-Wandler mit $U_{in} > U_{out}$ anwenden.

Das Schalttaktsignal für den Spannungswandler wird durch die digitale Regelschaltung 1 erzeugt und dient zur Ansteuerung des Schaltelements 2. Als Schaltelement 2 kann ein Leistungstransistor, beispielsweise ein MOSFET, verwendet werden.

In der An-Phase $T_{on}$ des rechteckförmigen Schalttaktsignals ist das Schaltelement 2 durchgeschaltet, die Speicherdrossel 3 ist daher mit der Eingangsspannung $U_{in}$ verbunden. Ab dem Schließen des Schaltelements 2 baut sich ein mit der Zeit zunehmender Strom $i_L$ durch die Speicherdrossel 3 auf. Ein Stromrückfluß aus der Kapazität 6 wird dabei durch die Diode 4 verhindert. Je länger die An-Phase $T_{on}$ des Schaltsignals ist, desto höher wird der Stromfluß durch die Speicherdrossel 3.

Mit dem Übergang des Schaltsignals in die Aus-Phase $T_{off}$ wird das Schaltelement 2 geöffnet, und der gespeicherte Stroin $i_L$ fließt durch die Diode 4 sowohl in die angeschlossene Last 5 als auch in den Kondensator 6. Der Widerstand 7 bezeichnet dabei den Serienwiderstand des Kondensators 6. Solange der Laststrom kleiner ist als der durch die Speicherdrossel 3 fließende Strom $i_L$ lädt der Reststrom den Kondensator 6 auf, und die Ausgangsspannung $U_{out}$ erhöht sich. Während der An-Phase $T_{on}$ klingt der durch die Speicherdrossel 3 fließende Strom $i_L$ ab, und dies führt auch zu einem Absinken der Ausgangsspannung. Ab Beginn der nächsten An-Phase des Schalttakts wird die Speicherdrossel 3 wieder neu mit Strom aufgeladen. Während dieser Taktphase dient der geladene Kondensator 6 als Stromquelle für die Last 5.

Je länger die Anschaltphase des Schaltelements 2 dauert, desto höher wird der durch die Speicherdrossel 3 fließende Strom $i_L$, und desto höher wird auch die Ausgangsspannung $U_{out}$. Die Ausgangsspannung kann daher über das Tastverhältnis des Schalttaktsignals geregelt werden. Zu diesem Zweck wird das Ausgangsspannungssignal 8 dem invertierenden Eingang des Komparators 9 zugeführt. Der Komparator 9 ist das einzige analoge Bauelement im Regelkreis des getakteten Spannungswandlers. An den nicht invertierenden Eingang des Komparators 9 wird die gewünschte Sollspannung 10 angelegt. Die beiden Spannungen $U_{out}$ und $U_{soll}$ werden durch den Komparator 9 verglichen. Wenn die Ausgangsspannung $U_{out}$ die Sollspannung $U_{soll}$ übersteigt, dann liegt der Komparatorausgang 11 auf einem ersten Digitalsignalwert. Im Fall von $U_{out} < U_{soll}$ dagegen erscheint am Komparatorausgang 11 ein zweiter Digitalsignalwert.

Der Komparatorausgang 11 wird von der digitalen Regelschaltung 1 mehrmals pro Schalttakt ausgelesen. Vorzugsweise wird als Abtastfrequenz ein Vielfaches der Schaltfrequenz verwendet.

Aus den ausgelesenen Digitalsignalwerten ermittelt die digitale Regelschaltung 1, ob die Ausgangsspannung nachgeregelt werden muß oder nicht, und in welche Richtung die Nachregelung erfolgen muß. Zu diesem Zweck ist insbesondere der Verlauf der Ausgangsspannung während der Aus-Phase des Schalttakts von Belang. Es genügt deshalb auch, den Komparatorausgang 11 nur während der Aus-Phase des Schalttakts auszutasten.

Falls zu viele Ausgangsspannungswerte unterhalb der Sollspannung liegen, wird das von der digitalen Regelschaltung 1 erzeugte Schalttaktsignal so verändert, daß die Dauer der Anschaltphase relativ zur Ausschaltphase zunimmt. Durch diese Veränderung des Tastverhältnisses wird der Stromfluß durch die Speicherdrossel 3'erhöht, und die Ausgangsspannung steigt im Mittel an.

Wenn die Auswertung der am Komparatorausgang 11 abgegriffenen Digitalsignalwerte dagegen ergibt, daß

die Ausgangsspannung im Mittel zu hoch ist, dann wird die Anschaltphase des Schalttakts durch die digitale Regelschaltung 1 verkürzt. Die Regelung der Ausgangsspannung erfolgt also in erster Linie über das Tastverhältnis des zur Ansteuerung des Schaltelements 2 verwendeten Rechtecksignals. Zusätzlich ist es möglich, auch die Taktfrequenz des Schalttaktsignals zu variieren.

In Fig. 2 ist eine Schaltungsvariante dargestellt, bei der die Ausgangsspannung genauer erfaßt werden kann. Dazu wird das Ausgangsspannungssignal 13 einem Analog/Digital-Wandler 14 zugeführt, der dieses Analogsignal in ein mehrere Bit breites Digitalsignal 15 umwandelt. Dieses Digitalsignal 15 kann dann von der digitalen Regelschaltung 16 abgetastet und der weiteren Regelung zugrunde gelegt werden. Auf diese Weise kann der Verlauf der Ausgangsspannung genauer erfaßt werden. Ein weiterer Vorteil ist, daß der Vergleich des Digitalsignals 15 mit der Sollspannung rechnerisch durchgeführt werden kann und die Sollspannung daher nicht tatsächlich zur Verfügung gestellt werden muß.

Falls die Stromaufnahme durch die angeschlossene Last eine gewisse Minimalstromstärke übersteigt, ergibt sich der in Fig. 3A dargestellte zeitliche Verlauf der Ausgangsspannung $U_{out}$. In Fig. 3B ist der Verlauf des zugehörigen Schalttaktsignals zu sehen. Das Schalttaktsignal ist ein Rechtecksignal der Periode T (17). Während der An-Phase 18 des Schalttaktsignals ist das Schaltelement 2 leitend. Deshalb leistet der Spulenstrom $i_L$ während der Dauer $T_{on}$ der An-Phase 18 keinen Beitrag zum Laststrom. Während $T_{on}$ dient der Kondensator 6 als Stromquelle für die Last 5. Das leichte Absinken der Ausgangsspannung $U_{out}$ während $T_{on}$ hat seine Ursache daher in der Entladung des Kondensators 6.

Zum Ausschaltzeitpunkt 20 geht das Schalttaktsignal von der An-Phase 18 in die Aus-Phase 19 über. Während der Dauer $T_{off}$ der Aus-Phase 19 ist das Schaltelement 2 gesperrt. Der Spulenstrom $i_L$ fließt über die Diode 4 in die Last 5, außerdem wird der Kondensator 6 aufgeladen. Wie in Fig. 3A erkennbar ist, bewirkt dieser Stromfluß $i_L$ ab dem Umschaltzeitpunkt 20 einen sprunghaften Anstieg 21 der Ausgangsspannung $U_{out}$. Während der Zeitdauer $T_{off}$ nimmt der Strom $i_L$ durch die Speicherdrossel 3 kontinuierlich ab, was zu einem charakteristischen schrägen Abfall 22 der Ausgangsspannung $U_{out}$ während der Aus-Phase 19 des Schalttaktsignals führt.

Dieser schräge Abfall 22 der Ausgangsspannung eignet sich besonders gut, um daraus eine Regelgröße für die Spannungsregelung abzuleiten. Dazu wird die Ausgangsspannung während der Aus-Phase 19 entsprechend der Abtastfrequenz mit Abtastpulsen 23 ausgelesen und in digitale Signalwerte umgewandelt. Aus dieser Folge von Digitalsignalwerten läßt sich die relative Lage des schrägen Abfalls 22 zu der vorgegebenen Sollspannung 24 ermitteln.

Das Ziel ist, die Ausgangsspannung so nachzuregeln, daß der schräge Spannungsverlauf eine definierte Position relativ zur Sollspannung 24 hat. Ein Teil der ausgetasteten Ausgangsspannungswerte soll also oberhalb von $U_{soll}$ und der restliche Teil unterhalb von $U_{soll}$ liegen. Wenn zu viele der ausgetasteten Spannungswerte oberhalb von $U_{soll}$ liegen, muß die An-Phase 18 ($T_{on}$)des Schalttaktsignals verkürzt werden. Falls dagegen die Ausgangsspannung während $T_{off}$ im Mittel zu niedrig ist, muß die An-Phase 18 verlängert werden.

Zum Einschaltzeitpunkt 25 wird das Schaltelement 2 wieder leitend, und ab diesem Zeitpunkt trägt der Spulenstrom nicht mehr zum Laststrom bei. Dadurch kommt es zu einem sprunghaften Abfall 26 der Ausgangsspannung.

In den Fig. 4A und 4B ist der zeitliche Verlauf der Ausgangsspannung $U_{out}$ sowie des Schalttaktsignals für den Fall eines geringen Laststroms gezeigt. Wegen des geringen Stromverbrauchs der Last wird die Speicherdrossel 3 während jeder Schalttaktperiode nur kurze Zeit mit der Eingangsspannung $U_{in}$ verbunden. Während der Dauer $T_{on}$ der An-Phase 27 baut sich daher nur ein geringer Stromfluß $i_L$ durch die Speicherdrossel 3 auf.

Wenn zum Ausschaltzeitpunkt 28 das Schaltelement 2 nichtleitend wird, kommt es zunächst wieder zu einem sprunghaften Anstieg 29 der Ausgangsspannung $U_{out}$. Der in der Spule gespeicherte Strom fließt innerhalb kurzer Zeit in die Last 5 und in den Kondensator 6 ab. Deshalb kommt es zunächst zu einem schrägen Abfall 30 der Ausgangsspannung. Zum Zeitpunkt 31, also noch während der Aus-Phase 32 des Schalttaktsignals, ist der Spulenstrom bereits auf Null abgeklungen. Ab dem Zeitpunkt 31 wird die Last 5 von dem Kondensator 6 mit Strom versorgt. Da die Last 5 nur wenig Strom zieht, ergibt sich im restlichen Teil der Aus-Phase 32 ein Bereich 33 mit konstantem Verlauf der Ausgangsspannung.

Man bezeichnet diesen für kleine Lastströme typischen Betriebsmodus als "lückenden Betrieb". Auch bei lückendem Betrieb soll die Ausgangsspannung so nachgeregelt werden, daß sich der schräge Spannungsverlauf 30 in einer definierten Position zur Sollspannung 34 befindet. Wenn jedoch sämtliche während $T_{off}$ ausgelesenen Spannungswerte bei der Regelung berücksichtigt werden, überwiegt wegen des Bereichs 33 auch bei bereits passend eingeregelter Ausgangsspannung die Zahl der unterhalb der Sollspannung liegenden Spannungswerte. Die Ausgangsspannung wird deshalb auf zu hohe Werte hochgeregelt.

Um dies zu verhindern, müßte ein Detektor vorgesehen werden, der beispielsweise durch Messung des Spulenstroms $i_L$ das Vorliegen eines lückenden Betriebs erkennt. Dies könnte beispielsweise durch Messung des Spannungsabfalls an einem mit der Speicherdrossel 3 in Reihe geschalteten Meßwiderstand geschehen. Dadurch kann der Zeitpunkt 31, zu dem der Spulenstrom auf Null abgefallen ist, erkannt werden. Um eine sinnvolle Regelung für den Fall des lückenden Betriebs zu erhalten, werden nur die Digitalsignalwerte zwischen dem Ausschaltzeitpunkt 28 und dem Zeitpunkt 31 berücksichtigt.

In Fig. 5 ist ein Schaltplan für eine konkrete Implementierung einer digitalen Regelschaltung 1 dargestellt. Die Spannungswandlerschaltung selbst entspricht dabei der in Fig. 1 gezeigten Schaltung, wobei als Schaltelement 2 ein Schalt-FET 35 verwendet wird.

Als Digitalisierungseinheit zur Umwandlung des analogen Ausgangsspannungssignals 8 in ein digitalisiertes Signal ist der Komparator 9 vorgesehen, der einen Vergleich zwischen dem Ausgangsspannungssignal 8 und der Sollspannung 10 durchführt.

Wenn die Ausgangsspannung größer als die Sollspannung ist, erscheint am Komparatorausgang 11 ein erster Digitalsignalwert. Ist dagegen die Ausgangsspannung kleiner als die Sollspannung, so liefert der Komparator 9 einen zweiten Digitalsignalwert. Der Komparatorausgang 11 wird durch den Vorwärts-/Rückwärts-Zähler 36 jeweils während der Aus-Phase $T_{off}$ mit der Abtastfrequenz 37 ausgelesen. Im dargestellten Beispiel wird eine Abtastfrequenz von 10,368 MHz verwendet.

Jedesmal, wenn der erste Digitalsignalwert am Komparatorausgang 11 ausgelesen wird, wird der Zählerstand um eins inkrementiert. Pro ausgelesenem zweiten Digitalsignalwert wird der Zählerstand um eins dekrementiert. Der am Ende der Aus-Phase des Schalttakts vorliegende Zählerstand gibt daher die Differenz der Anzahl von ausgelesenen ersten Digitalsignalwerten und ausgelesenen zweiten Digitalsignalwerten an. Wenn die während der Aus-Phase des Schalttakts erfaßten Ausgangsspannungswerte überwiegend oberhalb der Sollspannung liegen, dann ergibt sich am Ende der Aus-Phase ein positiver Zählerstand cnt. Ist die Ausgangspannung dagegen im Mittel zu niedrig, so wird der Zählerstand negativ.

In der dargestellten Implementierung wird die Grundfrequenz 39 aus der Abtastfrequenz 37 durch Frequenzteilung erhalten. Die Abtastfrequenz 37 beträgt hier 10,368 MHz und wird durch den Frequenzteiler 38 um den Faktor 64 geteilt, so daß eine Grundfrequenz 39 von 162 kHz erhalten wird.

Diese Grundfrequenz 39 wird dem Vorwärts-/Rückwärts-Zähler 36 zugeführt und triggert die Übertragung 40 des Zählerstands cnt an die Einheit zur Pulsweitenberechnung 41. Das Auslesen des Zählerstands und die Berechnung der für die neue Periode gültigen Pulsweite pw(k) geschieht dabei jeweils zu Beginn einer Periode der Grundfrequenz 39. Die Pulsweite pw(k) gibt dabei die Länge der An-Phase des Schalttaktsignals an. Bei positivem Zählerstand cnt muß pw(k) daher gegenüber pw(k-1) abgesenkt werden. Umgekehrt muß bei negativem Zählerstand pw(k) erhöht werden.

In der Einheit zur Pulsweitenberechnung 41 wird die für die neue Periode gültige Pulsweite pw(k) gemäß folgender Formel berechnet:

$$pw(k) = pw(k-1) + \frac{kr \cdot cnt}{64 \cdot (1 - pw(k-1))}$$

Ein sinnvoller Wert für kr ist beispielsweise kr = -0,15. Mittels des Faktors

$$\frac{1}{64 \cdot (1 - pw(k-1))}$$

wird der Zählerstand cnt auf die Zeit $T_{off}$ normiert, um unabhängig von der Pulsweite zu sein. Entsprechend der Grundfrequenz 39 wird die berechnete Pulsweite pw(k) an den Pulsweiten-Generator 43 (UPWM, Universal Puls Width Modulator) übertragen (42). Ausgehend von dieser Pulsweite pw(k), von der Grundfrequenz 39 (162 kHz) sowie von der Abtastfrequenz 37 erzeugt der Pulsweiten-Generator 43 das Schalttaktsignal 44. Das Schalttaktsignal 44 ist während der Zeitdauer $\frac{pw(k)}{162\ kHz}$ gleich 1 und für den Rest der Periode gleich 0.

Das so erzeugte Schalttaktsignal 44 dient einerseits zur Ansteuerung des Schalt-FET 35; andererseits wird mit der abfallenden Flanke des Schalttaktsignals 44 auch der Zählerstand des Vorwärts-/Rückwärts-Zählers 36 rückgesetzt (45).

**Patentansprüche**

1. Getakteter Spannungswandler, welcher aufweist:

    - eine Speicherdrossel (3);

- ein Schaltelement (2), das durch einen Schalttakt (44) angesteuert wird und das die Speicherdrossel (3) entsprechend dem Schalttakt (44) mit der Eingangsspannung verbindet und von dieser trennt;
- eine Diode (4), deren erster Anschluß mit dem Anschluß der Speicherdrossel (3) verbunden ist, mit dem auch das Schaltelement (2) verbunden ist, und an deren zweitem Anschluß die Ausgangsspannung (8; 13) abgreifbar ist;
- eine Digitalisierungseinheit (9; 14), die ein für die Höhe der Ausgangsspannung (8; 13) repräsentatives Digitalsignal (11; 15) liefert;
- eine digitale Regelschaltung (1; 16), die das von der Digitalisierungseinheit (9; 14) gelieferte Digitalsignal (11; 15) mit einem Abtasttakt ausliest, dessen Frequenz (37) höher ist als die Frequenz des Schalttakts (44), und die aus den ausgelesenen Digitalsignalwerten einen Regelwert generiert;
- einen Taktgenerator (43), der den Schalttakt (44) zur Ansteuerung des Schaltelements (2) erzeugt, wobei das Tastverhältnis und/oder die Taktfrequenz des Schalttakts (44) durch den Regelwert beeinflußt werden.

**2.** Getakteter Spannungswandler nach Anspruch 1,
**dadurch gekennzeichnet, daß**
das von der Digitalisierungseinheit (9; 14) gelieferte Digitalsignal (11; 15) nur während der Aus-Phase (19) des Schalttakts ausgelesen wird, während der sich das Schaltelement (2) im gesperrten Zustand befindet.

**3.** Getakteter Spannungswandler nach einem der vorhergehenden Ansprüche,
**dadurch gekennzeichnet, daß**
der Regelwert dergestalt generiert wird bzw. das Tastverhältnis und/oder die Taktfrequenz des Schalttakts (44) dergestalt geregelt werden, daß ein vorbestimmter Bruchteil der während der Aus-Phase (19) des Schalttakts ausgelesenen Digitalsignalwerte Ausgangsspannungen oberhalb der Sollspannung (10) repräsentiert, und daß der restliche Teil der während der Aus-Phase (19) des Schalttakts ausgelesenen Digitalsignalwerte Ausgangsspannungen unterhalb der Sollspannung (10) repräsentiert.

**4.** Getakteter Spannungswandler nach Anspruch 3,
**dadurch gekennzeichnet, daß**
der Regelwert dergestalt generiert wird bzw. das Tastverhältnis und/oder die Taktfrequenz des Schalttakts (44) dergestalt geregelt werden, daß die Hälfte der während der Aus-Phase (19) des Schalttakts ausgelesenen Digitalsignalwerte Ausgangsspannungen oberhalb der Sollspannung (10) repräsentiert, und daß die andere Hälfte der während der Aus-Phase (19) des Schalttakts ausgelesenen Digitalsignalwerte Ausgangsspannungen unterhalb der Sollspannung (10) repräsentiert.

**5.** Getakteter Spannungswandler nach einem der vorhergehenden Ansprüche,
**dadurch gekennzeichnet, daß**
es sich bei der Digitalisierungseinheit um eine Komparatorschaltung (9) handelt, die die Ausgangsspannung (8) mit einer vorgegebenen Sollspannung (10) vergleicht.

**6.** Getakteter Spannungswandler nach Anspruch 5,
**dadurch gekennzeichnet, daß**
die Komparatorschaltung (9) im Fall einer die Sollspannung (10) übersteigenden Ausgangsspannung (8) einen ersten Digitalsignalwert liefert und im Fall einer die Sollspannung (10) unterschreitenden Ausgangsspannung (8) einen zweiten Digitalsignalwert liefert.

**7.** Getakteter Spannungswandler nach einem der vorhergehenden Ansprüche,
**dadurch gekennzeichnet, daß**
es sich bei der Digitalisierungseinheit um einen Analog/Digital-Wandler (14) handelt.

**8.** Getakteter Spannungswandler nach einem der vorhergehenden Ansprüche,
**dadurch gekennzeichnet, daß**
die digitale Regelschaltung (1; 16) einen Zähler (36) umfaßt, dessen Zählerstand für jeden während der Aus-Phase (19) des Schalttakts ausgelesenen Digitalsignalwert, der eine Ausgangsspannung oberhalb der Sollspannung (10) repräsentiert, inkrementiert wird und dessen Zählerstand für jeden während der Aus-Phase (19) des Schalttakts ausgelesenen Digitalsignalwert, der eine Ausgangsspannung unterhalb der Sollspannung (10) repräsentiert, dekrementiert wird.

**9.** Getakteter Spannungswandler nach Anspruch 8,

**dadurch gekennzeichnet, daß**
der nach der Aus-Phase (19) eines Schalttakts vorliegende Zählerstand zur Festlegung des aktuellen Regelwerts verwendet wird, wobei ein positiver Zählerstand den Regelwert so beeinflußt, das die An-Phase (18) des Schalttakts verkürzt wird, und ein negativer Zählerstand den Regelwert so beeinflußt, daß die An-Phase (18) des Schalttakts verlängert wird.

**10.** Getakteter Spannungswandler nach Anspruch 8 oder Anspruch 9,
**dadurch gekennzeichnet, daß**
der Zähler (36) vor Beginn oder mit Beginn der Aus-Phase (19) des Schalttakts auf Null zurückgesetzt wird.

**11.** Getakteter Spannungswandler nach einem der vorhergehenden Ansprüche,
**dadurch gekennzeichnet, daß**
die Aus-Phase (19) des Schalttakts nur bis zu einer vorgegebenen oberen Grenze variierbar ist.

**12.** Getakteter Spannunswandler nach einem der vorhergehenden Ansprüche,
**dadurch gekennzeichnet, daß**
die Aus-Phase (19) des Schalttakts nur bis zu einer vorgegebenen unteren Grenze variierbar ist.

**13.** Getakteter Spannungswandler nach einem der vorhergehenden Ansprüche,
**dadurch gekennzeichnet, daß**
der Schalttakt (44) ein Vielfaches des Abtasttakts ist.

**14.** Getakteter Spannungswandler nach Anspruch 13,
**dadurch gekennzeichnet, daß**
die Frequenz des Schalttakts (44) mittels eines Frequenzteilers (38) aus der höheren Frequenz (37) des Abtasttakts erzeugt wird.

**15.** Getakteter Spannungswandler nach einem der vorhergehenden Ansprüche,
**dadurch gekennzeichnet, daß**
ein für die Höhe des Speicherdrosselstroms repräsentatives Digitalsignal generiert und der digitalen Regelschaltung (1; 16) zugeführt wird, welches bei der Festlegung des Regelwerts berücksichtigt wird.

**16.** Getakteter Spannungswandler nach einem der vorhergehenden Ansprüche,
**dadurch gekennzeichnet, daß**
ein für die Höhe der Eingangsspannung repräsentatives Digitalsignal generiert und der digitalen Regelschaltung (1; 16) zugeführt wird, welches bei der Festlegung des Regelwerts berücksichtigt wird.

**17.** Getakteter Spannungswandler nach einem der vorhergehenden Ansprüche,
**dadurch gekennzeichnet, daß**
ein Digitalsignal zur Unterscheidung von lückendem und nicht lückendem Betrieb generiert und der digitalen Regelschaltung (1; 16) zugeführt wird, welches bei der Festlegung des Regelwerts berücksichtigt wird.

**18.** Verfahren zur Erzeugung eines Regelwerts für einen getakteten Spannungswandler, welches folgende Schritte umfaßt:

a)Auslesen der Ausgangsspannung des Spannungswandlers mit einem Abtasttakt, dessen Frequenz (37) höher ist als die Frequenz des Schalttaktes (44) des Spannungswandlers;
b)Erzeugen eines Regelwertes durch Auswerten der bei der Abtastung gewonnenen Spannungswerte;
c)Erzeugen des Schalttaktes, wobei das Tastverhältnis und/oder die Taktfrequenz des Schalttaktes (44) durch den Regelwert beeinflußt werden.

**19.** Verfahren nach Anspruch 18, **dadurch gekennzeichnet, daß**
Schritt b) umfaßt:

Ermitteln, wie viele der während der Aus-Phase (19) des Schalttakts ausgelesenen Spannungswerte eine vorgegebene Sollspannung (10) überschreiten bzw. unterschreiten.

**20.** Verfahren nach Anspruch 19, **dadurch gekennzeichnet, daß**

Schritt c) umfaßt:

Bestimmen eines Regelwerts zur Nachregelung des Tastverhältnisses und/oder der Taktfrequenz des Schalttakts (44) dergestalt, daß ein vorgegebener Bruchteil der während der Aus-Phase (19) ausgelesenen Ausgangsspannungen Spannungswerte oberhalb der Sollspannung (10) aufweist und daß der restliche Teil der während der Aus-Phase (19) des Schalttakts ausgelesenen Ausgangsspannungen Spannungswerte unterhalb der Sollspannung (10) aufweist.

**21.** Verfahren nach Anspruch 20,
**dadurch gekennzeichnet, daß**
der Regelwert zur Nachregelung des Tastverhältnisses und/oder der Taktfrequenz dergestalt bestimmt wird, daß die Hälfte der während der Aus-Phase (19) ausgelesenen Ausgangsspannungen Spannungswerte oberhalb der sollspannung (10) aufweist und
daß die andere Hälfte der während der Aus-Phase (19) des Schalttakts ausgelesenen Ausgangsspannungen Spannungswerte unterhalb der Sollspannung (10) aufweist.

**22.** Verfahren nach einem der Ansprüche 19 bis 21,
**dadurch gekennzeichnet, daß**
Schritt b) mittels eines Zählers (36) ausgeführt wird, dessen Zählerstand für jede während der Aus-Phase (19) des Schalttakts ausgelesene Ausgangsspannung mit einem Spannungswert oberhalb der Sollspannung (10) inkrementiert wird, und dessen Zählerstand für jede während der Aus-Phase (19) des Schalttakts ausgelesene Ausgangsspannung mit einem Spannungswert unterhalb der Sollspannnung dekrementiert wird.

**23.** Verfahren nach Anspruch 22,
**dadurch gekennzeichnet, daß**
zur Bestimmung des Regelwerts gemäß Schritt c) der nach der Aus-Phase (19) eines Schalttakts vorliegende Zählerstand verwendet wird, wobei ein positiver Zählerstand den Regelwert so beeinflußt, daß die An-Phase (18) des Schalttakts verkürzt wird, und ein negativer Zählerstand den Regelwert so beeinflußt, daß die An-Phase (18) des Schalttakts verlängert wird.

**24.** Verfahren nach einem der Ansprüche 18 bis 23,
**dadurch gekennzeichnet, daß**
der Schalttakt (44) ein Vielfaches des Abtasttakts ist.

**25.** Verfahren nach Anspruch 24,
**dadurch gekennzeichnet, daß**
die Frequenz des Schalttakts (44) mittels eines Frequenzteilers (38) aus der höheren Frequenz (37) des Abtasttakts erzeugt wird.

## Claims

**1.** Pulsed voltage converter which has:

- an energy storage inductor (3);
- a switching element (2) which is driven by a switching clock (44) and which connects the energy storage inductor (3) to the input voltage, and disconnects it from the input voltage, in accordance with the switching clock (44);
- a diode (4), whose first connection is connected to that connection of the energy storage inductor (3) to which the switching element (2) is also connected, and at whose second connection the output voltage (8; 13) can be tapped off;
- a digitization unit (9; 14) which supplies a digital signal (11; 15) which is representative of the magnitude of the output voltage (8; 13);
- a digital control circuit (1; 16) which uses a sampling clock to read the digital signal (11; 15) which is supplied from the digitization unit (9; 14), the frequency (37) of which sampling clock is higher than the frequency of the switching clock (44), and which digital control circuit (1; 16) generates a control value from the digital signal values that are read;
- a clock generator (43), which produces the switching clock (44) for driving the switching element (2), with the

duty ratio and/or the clock frequency of the switching clock (44) being influenced by the control value.

2. Pulsed voltage converter according to Claim 1,
**characterized in that**
the digital signal (11; 15) which is supplied from the digitization unit (9; 14) is read only during the off phase (19) of the switching clock, during which the switching element (2) is in the switched-off state.

3. Pulsed voltage converter according to one of the preceding claims,
**characterized in that**
the control value is generated and the duty ratio and/or the clock frequency of the switching clock (44) are/is controlled such that a predetermined fraction of the digital signal values which are read during the off phase (19) of the switching clock represents output voltages greater than the nominal voltage (10), and **in that** the remaining portion of the digital signal values which are read during the off phase (19) of the switching clock represents output voltages less than the nominal voltage (10).

4. Pulsed voltage converter according to Claim 3,
**characterized in that**
the control value is generated and the duty ratio and/or the clock frequency of the switching clock (44) are/is controlled such that half of the digital signal values which are read during the off phase (19) of the switching clock represents output voltages greater than the nominal voltage (10), and **in that** the other half of the digital signal values which are read during the off phase (19) of the switching clock represents output voltages less than the nominal voltage (10).

5. Pulsed voltage converter according to one of the preceding claims,
**characterized in that**
the digitization unit is a comparator circuit (9) which compares the output voltage (8) with a predetermined nominal voltage (10).

6. Pulsed voltage converter according to Claim 5,
**characterized in that**
the comparator circuit (9) supplies a first digital signal value when the output voltage (8) is greater than the nominal voltage (10), and supplies a second digital signal value when the output voltage (8) is less than the nominal voltage (10).

7. Pulsed voltage converter according to one of the preceding claims,
**characterized in that**
the digitization unit is an analog/digital converter (14).

8. Pulsed voltage converter according to one of the preceding claims,
**characterized in that**
the digital control circuit (1; 16) has a counter (36) whose count is incremented for each digital signal value which is read during the off phase (19) of the switching clock and which represents an output voltage greater than the nominal voltage (10), and whose count is decremented for each digital signal value which is read during the off phase (19) of the switching clock and which represents an output voltage less than the nominal voltage (10).

9. Pulsed voltage converter according to Claim 8,
**characterized in that**
the count which is present after the off phase (19) in a switching clock cycle is used to define the control value at that time, with a positive count influencing the control value such that the on phase (18) of the switching clock is shortened, and with a negative count influencing the control value such that the on phase (18) of the switching clock is lengthened.

10. Pulsed voltage converter according to Claim 8 or Claim 9,
**characterized in that**
the counter (36) is reset to zero before the start or at the start of the off phase (19) of the switching clock.

11. Pulsed voltage converter according to one of the preceding claims,
**characterized in that**

the off phase (19) of the switching clock can be varied only as far as a predetermined upper limit.

**12.** Pulsed voltage converter according to one of the preceding claims,
**characterized in that**
the off phase (19) of the switching clock can be varied only as far as a predetermined lower limit.

**13.** Pulsed voltage converter according to one of the preceding claims,
**characterized in that**
the switching clock rate (44) is a multiple of the sampling clock rate.

**14.** Pulsed voltage converter according to Claim 13,
**characterized in that**
the frequency of the switching clock (44) is produced by means of a frequency divider (38) from the higher frequency (37) of the sampling clock.

**15.** Pulsed voltage converter according to one of the preceding claims,
**characterized in that**
a digital signal which is representative of the magnitude of the energy storage inductor current is generated, is supplied to the digital control circuit (1; 16) and is taken into account when defining the control value.

**16.** Pulsed voltage converter according to one of the preceding claims,
**characterized in that** a digital signal which is representative of the magnitude of the input voltage is generated, is supplied to the digital control circuit (1; 16) and is taken into account when defining the control value.

**17.** Pulsed voltage converter according to one of the preceding claims,
**characterized in that**
a digital signal is generated in order to distinguish between noncontinuous and continuous operation, is supplied to the digital control circuit (1; 16) and is taken into account when defining the control value.

**18.** Method for producing a control value for a pulsed voltage converter, which method comprises the following steps:

a) the output voltage of the voltage converter is read using a sampling clock whose frequency (37) is higher than the frequency of the switching clock (44) of the voltage converter;
b) a control value is produced by evaluation of the voltage values obtained during the sampling process; and
c) the switching clock is produced, with the duty ratio and/or the clock frequency of the switching clock (44) being influenced by the control value.

**19.** Method according to Claim 18,
**characterized in that**
step b) comprises:

determining the number of voltage values which are read during the off phase (19) of the switching clock and which are greater than or less than a predetermined nominal voltage (10).

**20.** Method according to Claim 19,
**characterized in that** step c) comprises:

determining a control value for readjustment of the duty ratio and/or of the clock frequency of the switching clock (44) such that a predetermined fraction of the output voltages which are read during the off phase (19) has voltage values greater than the nominal voltage (10), and **in that** the remaining portion of the output voltages which are read during the off phase (19) of the switching clock has voltage values less than the nominal voltage (10).

**21.** Method according to Claim 20,
**characterized in that**
the control value is intended for readjustment of the duty ratio and/or of the clock frequency such that half of the output voltages which are read during the off phase (19) has voltage values greater than the nominal voltage (10), and such that the other half of the output voltages which are read during the off phase (19) of the switching clock

has voltage values less than the nominal voltage (10).

**22.** Method according to one of Claims 19 to 21,
**characterized in that**
step b) is carried out by means of a counter (36) whose count is incremented for each output voltage which is read during the off phase (19) of the switching clock and has a voltage value greater than the nominal voltage (10), and whose count is decremented for each output voltage which is read during the off phase (19) of the switching clock and has a voltage value less than the nominal voltage.

**23.** Method according to Claim 22,
**characterized in that**
the count which is present after the off phase (19) of a switching clock is used to determine the control value in accordance with step c), with a positive count influencing the control value such that the on phase (18) of the switching clock is shortened, and a negative count influencing the control value such that the on phase (18) of the switching clock is lengthened.

**24.** Method according to one of Claims 18 to 23,
**characterized in that**
the switching clock rate (44) is a multiple of the sampling clock rate.

**25.** Method according to Claim 24,
**characterized in that**
the frequency of the switching clock (44) is produced by means of a frequency divider (38) from the higher frequency (37) of the sampling clock.

## Revendications

**1.** Convertisseur de tension à découpage, qui comporte :

- une self de stockage (3) ;
- un élément de commutation (2) qui est commandé par un cycle de commutation (44) et qui relie la self de stockage (3) à la tension d'entrée et la sépare de celle-ci en fonction du cycle de commutation (44) ;
- une diode (4) dont la première borne est reliée à la borne de la self de stockage (3), à laquelle l'élément de commutation (2) est aussi relié, et à la deuxième borne de laquelle la tension de sortie (8 ; 13) peut être prélevée ;
- une unité de numérisation (9 ; 14) qui fournit un signal numérique (11 ; 15) représentatif de l'amplitude de la tension de sortie (8 ; 13) ;
- un circuit de régulation numérique (1 ; 16) qui lit le signal numérique (11 ; 15), fourni par l'unité de numérisation (9 ; 14), avec une cadence d'échantillonnage dont la fréquence (37) est supérieure à la fréquence du cycle de commutation (44) et qui produit une valeur de régulation à partir des valeurs de signal numérique lues ;
- un générateur de cadence (43) qui produit le cycle de commutation (44) pour la commande de l'élément de commutation (2), le taux d'impulsions et/ou la fréquence du cycle de commutation (44) étant influencés par la valeur de régulation.

**2.** Convertisseur de tension à découpage selon la revendication 1, **caractérisé par le fait que** le signal numérique (11 ; 15) fourni par l'unité de numérisation (9 ; 14) n'est lu que pendant la phase déconnectée (19) du cycle de commutation pendant laquelle l'élément de commutation (2) se trouve dans l'état bloqué.

**3.** Convertisseur de tension à découpage selon l'une des revendications précédentes, **caractérisé par le fait que** la valeur de régulation est produite de telle sorte ou le taux d'impulsions et/ou la fréquence du cycle de commutation (44) sont réglés de telle sorte qu'une fraction prédéterminée des valeurs de signal numérique lues pendant la phase déconnectée (19) du cycle de commutation représente des tensions de sortie au-dessus de la valeur de consigne (10) et que la partie restante des valeurs de signal numérique lues pendant la phase déconnectée (19) du cycle de commutation représente des tensions de sortie au-dessous de la tension de consigne (10).

**4.** Convertisseur de tension à découpage selon la revendication 3, **caractérisé par le fait que** la valeur de régulation est produite de telle sorte ou le taux d'impulsions et/ou la fréquence du cycle de commutation (44) sont réglés de

telle sorte que la moitié des valeurs de signal numérique lues pendant la phase déconnectée (19) du cycle de commutation représente des tensions de sortie au-dessus de la valeur de consigne (10) et que l'autre moitié des valeurs de signal numérique lues pendant la phase déconnectée (19) du cycle de commutation représente des tensions de sortie au-dessous de la tension de consigne (10).

5. Convertisseur de tension à découpage selon l'une des revendications précédentes, **caractérisé par le fait que** l'unité de numérisation est un circuit comparateur (9) qui compare la tension de sortie (8) à une tension de consigne (10) prédéterminée.

6. Convertisseur de tension à découpage selon la revendication 5, **caractérisé par le fait que** le circuit comparateur (9) fournit une première valeur de signal numérique dans le cas d'une tension de sortie (8) supérieure à la tension de consigne (10) et une deuxième valeur de signal numérique dans le cas d'une tension de sortie (8) inférieure à la tension de consigne (10).

7. Convertisseur de tension à découpage selon l'une des revendications précédentes, **caractérisé par le fait que** l'unité de numérisation est un convertisseur analogique-numérique (14).

8. Convertisseur de tension à découpage selon l'une des revendications précédentes, **caractérisé par le fait que** le circuit de régulation numérique (1 ; 16) comporte un compteur (36) dont l'état de compteur est incrémenté pour chaque valeur de signal numérique qui est lue pendant la phase déconnectée (19) du cycle de commutation et qui représente une tension de sortie supérieure à la tension de consigne (10) et dont l'état de compteur est décrémenté pour chaque valeur de signal numérique qui est lue pendant la phase déconnectée (19) du cycle de commutation et qui représente une tension de sortie inférieure à la tension de consigne (10).

9. Convertisseur de tension à découpage selon la revendication 8, **caractérisé par le fait que** l'état de compteur présent après la phase déconnectée (19) d'un cycle de commutation est utilisé pour fixer la valeur de régulation actuelle, un état de compteur positif influençant la valeur de régulation de telle sorte que la phase connectée (18) du cycle de commutation est réduite et un état de compteur négatif influençant la valeur de régulation de telle sorte que la phase connectée (18) du cycle de commutation est prolongée.

10. Convertisseur de tension à découpage selon la revendication 8 ou la revendication 9, **caractérisé par le fait que** le compteur (36) est remis à zéro avant le début ou au début de la phase déconnectée (19) du cycle de commutation.

11. Convertisseur de tension à découpage selon l'une des revendications précédentes, **caractérisé par le fait que** la phase déconnectée (19) du cycle de commutation ne peut être modifiée que jusqu'à une limite supérieure prédéterminée.

12. Convertisseur de tension à découpage selon l'une des revendications précédentes, **caractérisé par le fait que** la phase déconnectée (19) du cycle de commutation ne peut être modifiée que jusqu'à une limite inférieure prédéterminée.

13. Convertisseur de tension à découpage selon l'une des revendications précédentes, **caractérisé par le fait que** la cadence du cycle de commutation (44) est un multiple de la cadence d'échantillonnage.

14. Convertisseur de tension à découpage selon la revendication 13, **caractérisé par le fait que** la fréquence du cycle de commutation (44) est produite au moyen d'un diviseur de fréquence (38) à partir de la fréquence d'échantillonnage (37) supérieure.

15. Convertisseur de tension à découpage selon l'une des revendications précédentes, **caractérisé par le fait qu'**un signal numérique représentatif de l'amplitude du courant de self de stockage est produit et est envoyé au circuit de régulation numérique (1 ; 16), lequel signal est pris en compte pour fixer la valeur de régulation.

16. Convertisseur de tension à découpage selon l'une des revendications précédentes, **caractérisé par le fait qu'**un signal numérique représentatif de l'amplitude de la tension d'entrée est produit et est envoyé au circuit de régulation numérique (1 ; 16), lequel signal est pris en compte pour fixer la valeur de régulation.

17. Convertisseur de tension à découpage selon l'une des revendications précédentes, **caractérisé par le fait qu'**un

signal numérique est produit pour distinguer entre fonctionnement avec coupure et fonctionnement sans coupure et est envoyé au circuit de régulation numérique (1 ; 16), lequel signal est pris en compte pour fixer la valeur de régulation.

**18.** Procédé de production d'une valeur de régulation pour un convertisseur de tension à découpage, qui comprend les étapes suivantes :

a) lecture de la tension de sortie du convertisseur de tension avec une cadence d'échantillonnage dont la fréquence (37) est supérieure à la fréquence du cycle de commutation (44) du convertisseur de tension ;
b) production d'une valeur de régulation par évaluation des valeurs de tension obtenues lors de l'échantillonnage ;
c) production du cycle de commutation, le taux d'impulsions et/ou la fréquence d'échantillonnage du cycle de commutation (44) étant influencés par la valeur de régulation.

**19.** Procédé selon la revendication 18, **caractérisé par le fait que** l'étape b) comprend :

la détermination du nombre des valeurs de tension lues pendant la phase déconnectée (19) du cycle de commutation qui sont supérieures ou inférieures à une valeur de consigne (10) prédéterminée.

**20.** Procédé selon la revendication 19, **caractérisé par le fait que** l'étape c) comprend :

la détermination d'une valeur de régulation pour la post-régulation du taux d'impulsions et/ou de la fréquence d'échantillonnage du cycle de commutation (44) de telle sorte qu'une fraction prédéterminée des tensions de sortie lues pendant la phase déconnectée (19) ont des valeurs de tension au-dessus de la valeur de consigne (10) et que la partie restante des tensions de sortie lues pendant la phase déconnectée (19) du cycle de commutation ont des valeurs de tension au-dessous de la tension de consigne (10).

**21.** Procédé selon la revendication 20, **caractérisé par le fait que** la valeur de régulation pour la post-régulation du taux d'impulsions et/ou de la fréquence d'échantillonnage est déterminée de telle sorte que la moitié des tensions de sortie lues pendant la phase déconnectée (19) ont des valeurs de tension au-dessus de la valeur de consigne (10) et que l'autre moitié des tensions de sortie lues pendant la phase déconnectée (19) du cycle de commutation ont des valeurs de tension au-dessous de la tension de consigne (10).

**22.** Procédé selon l'une des revendications 19 à 21, **caractérisé par le fait que** l'étape b) est réalisée au moyen d'un compteur (36) dont l'état de compteur est incrémenté pour chaque tension de sortie qui est lue pendant la phase déconnectée (19) du cycle de commutation et qui a une valeur de tension supérieure à la tension de consigne (10) et dont l'état de compteur est décrémenté pour chaque tension de sortie qui est lue pendant la phase déconnectée (19) du cycle de commutation et qui a une valeur de tension inférieure à la tension de consigne.

**23.** Procédé selon la revendication 22, **caractérisé par le fait que**, pour la détermination de la valeur de régulation selon l'étape c), on utilise l'état de compteur présent après la phase déconnectée (19) d'un cycle de commutation, un état de compteur positif influençant la valeur de régulation de telle sorte que la phase connectée (18) du cycle de commutation est réduite et un état de compteur négatif influençant la valeur de régulation de telle sorte que la phase connectée (18) du cycle de commutation est prolongée.

**24.** Procédé selon l'une des revendications 18 à 23, **caractérisé par le fait que** la cadence du cycle de commutation (44) est un multiple de la cadence d'échantillonnage.

**25.** Procédé selon la revendication 24, **caractérisé par le fait que** la fréquence du cycle de commutation (44) est produite au moyen d'un diviseur de fréquence (38) à partir de la fréquence d'échantillonnage (37) supérieure.

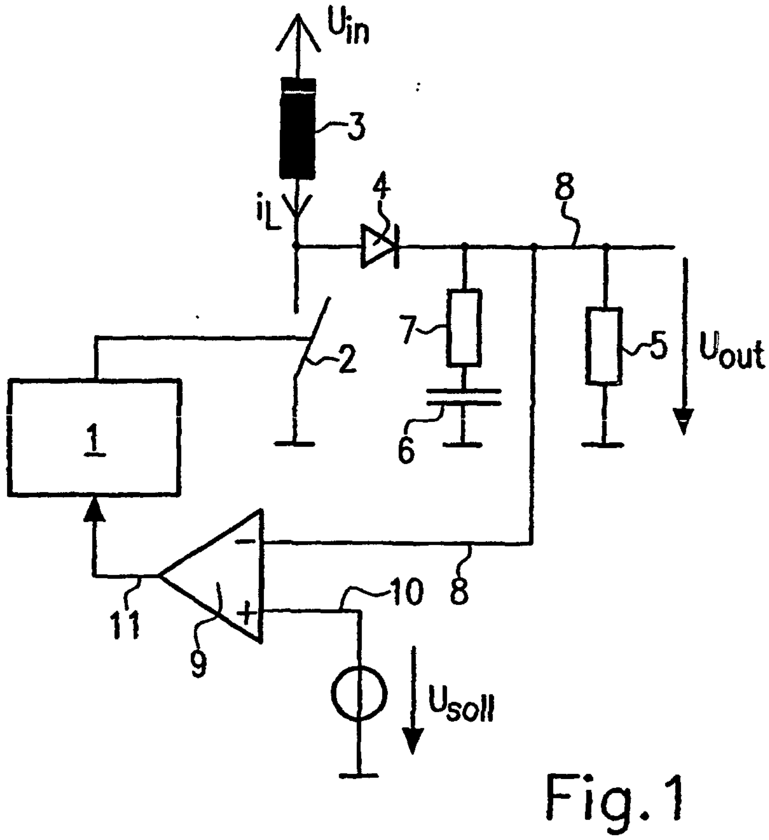
Uin
3
iL
4
8
7
2
5
Uout
1
6
11
9
10
8
Usoll

Fig.1

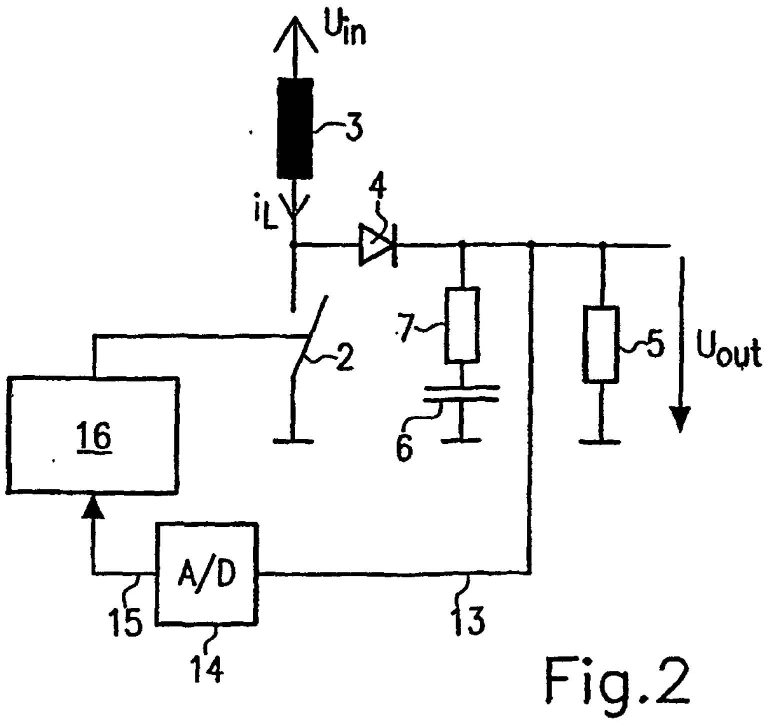
Uin
3
iL
4
7
2
5
Uout
16
6
A/D
15
14
13

Fig.2

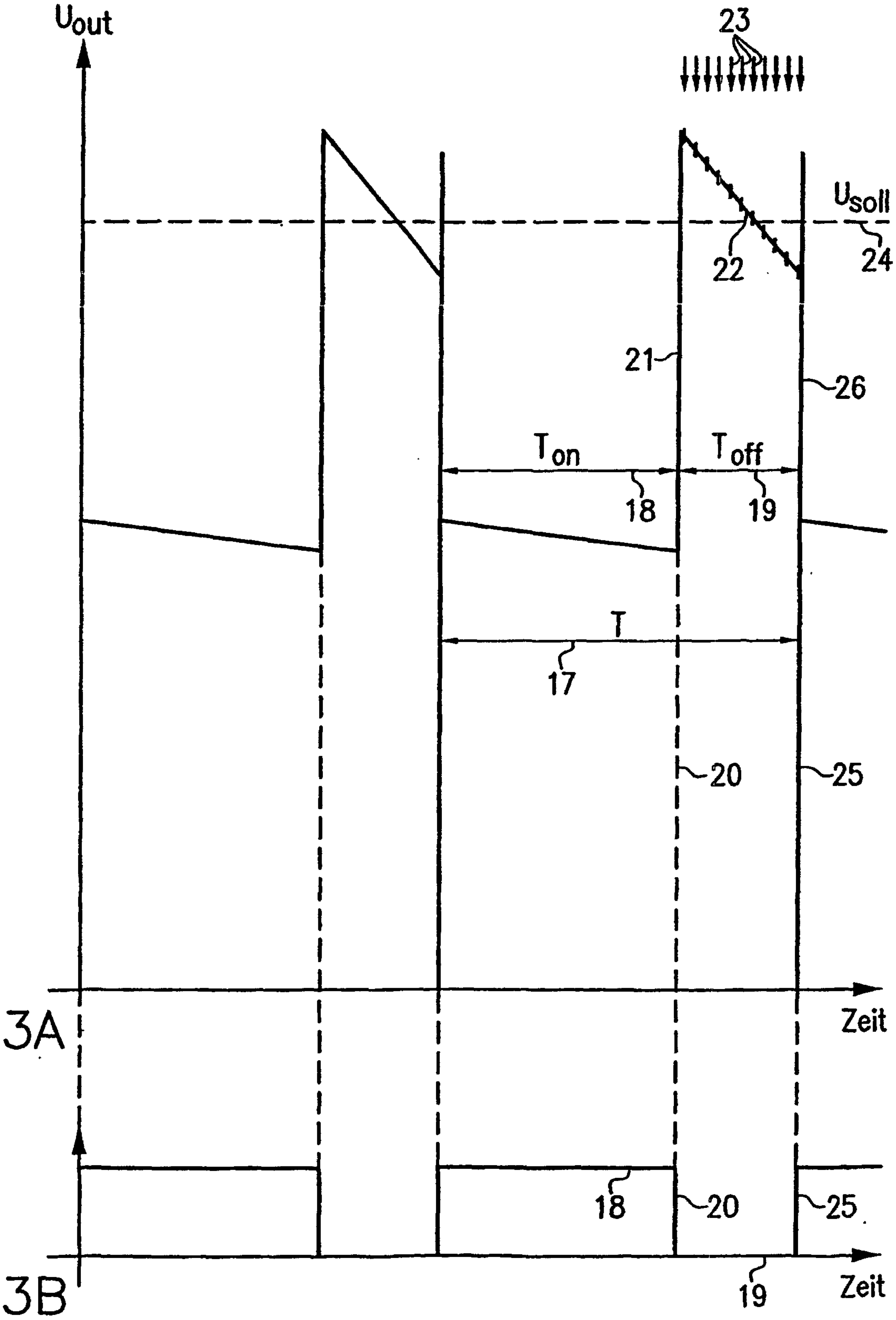
Uout
23
Usoll
24
22
21
26
Ton
Toff
18
19
T
17
20
25
Zeit
18
20
25
19
Zeit

Fig.3A

Fig.3B

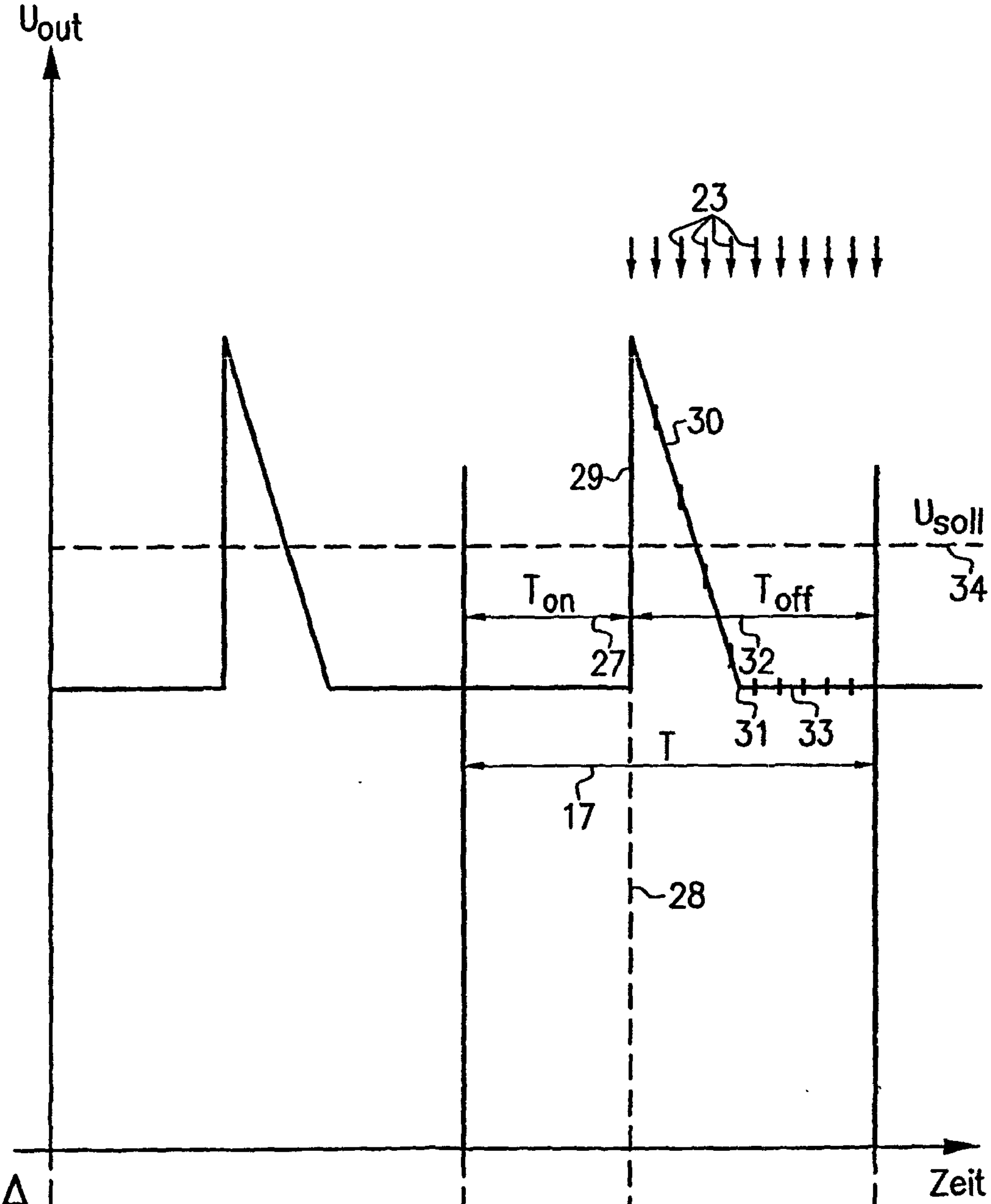

$U_{out}$
23
30
29
$U_{soll}$
34
$T_{on}$
$T_{off}$
27
32
31
33
T
17
28
Zeit


Fig.4A

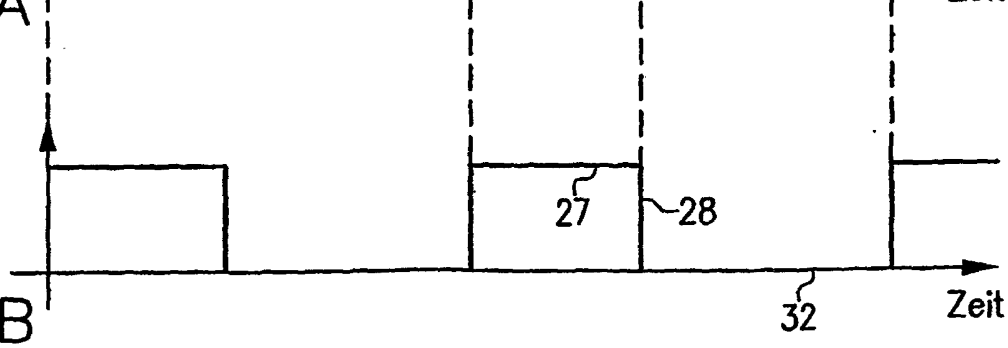

27
28
32
Zeit


Fig.4B

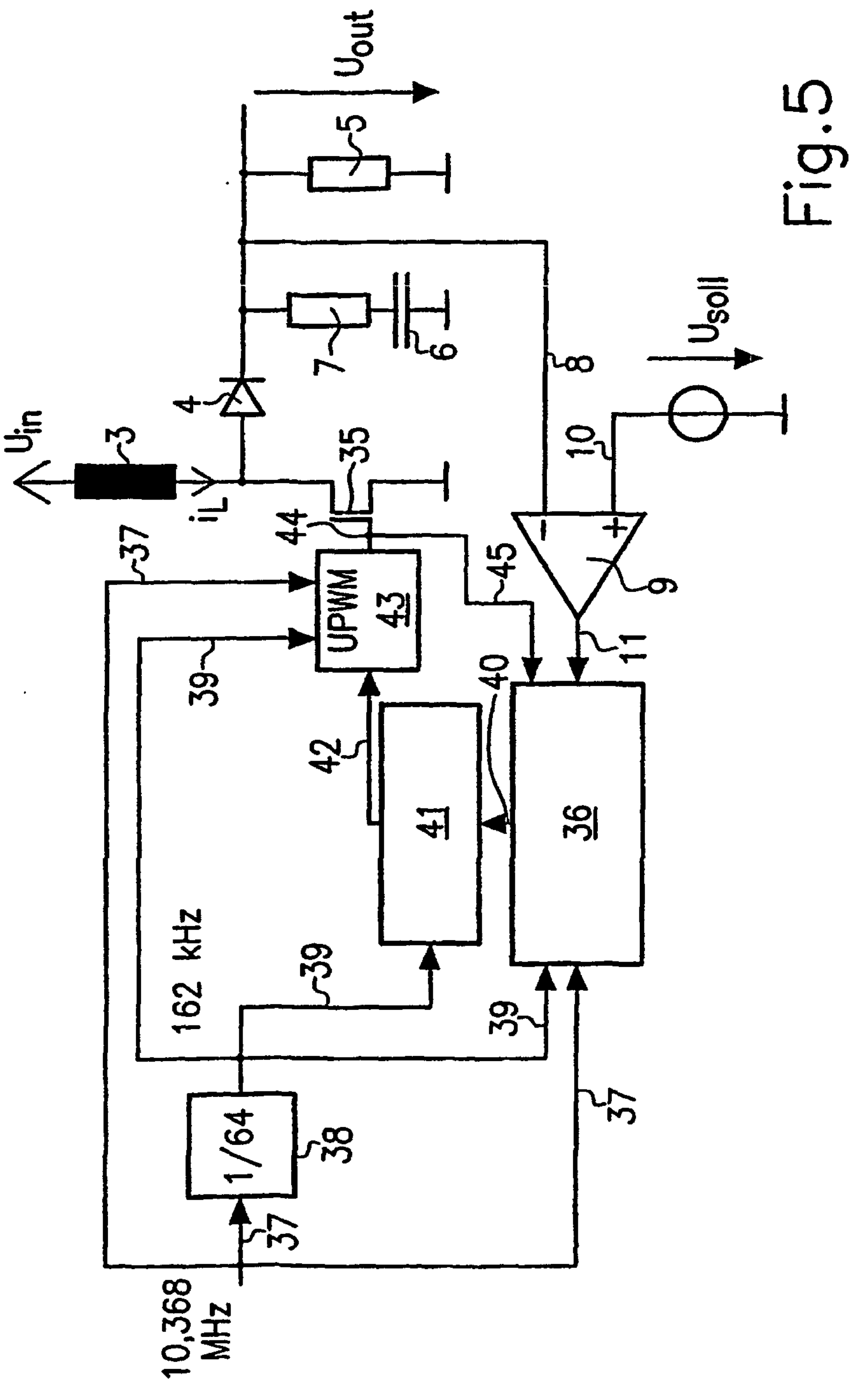


Fig.5